# EUROPEAN PATENT SPECIFICATION

(11) **EP 1 495 244 B1**
(45) Date of publication and mention of the grant of the patent: **18.10.2006**
(21) Application number: 03714591.9
(22) Date of filing: 17.04.2003
(51) Int. Cl.: F16K 1/46

(54) **PRESSURIZED VALVE SEAL**
UNTER DRUCK STEHENDE VENTILDICHTUNG
SIEGE DE SOUPAPE SOUS PRESSION

(30) Priority: 18.04.2002 US 124404; 18.04.2002 CA 2382594
(43) Date of publication of application: 12.01.2005
(73) Proprietor: Teleflex GFI Control Systems L.P., Kitchener, Ontario N2K 2Z3 (CA)
(72) Inventor: LANTING, Henry, Kitchener, Ontario N2K 1N1 (CA); WOO, Po, Guelph, Ontario N1E 3K2 (CA)
(74) Representative: Leonhard, Frank Reimund
(86) International application number: PCT/CA2003/000580
(87) International publication number: WO 2003/089820

(56) References cited:
- CH-A- 378 626
- GB-A- 1 015 412
- GB-A- 1 033 883
- US-A- 5 474 104
- US-A- 5 785 082

## Description

This invention relates to a valve and valve seals as pressurized valve seals.

Valves typically employ a resilient seating material, such as an o-ring, about the perimeter of a port or aperture. The resilient seating material is intended to engage and be compressed by a movable valve sealing member to effect sealing of the port or aperture. The seating material is disposed and contained within a sealing gland, provided in the body of the valve. In order to achieve desirable sealing properties, the seating material must be sealingly engaged to the sealing gland both upstream and downstream of the point of sealing engagement between the valve sealing member and the seating material. Under some operating conditions, the seating member moves away from the sealing gland, creating a flow path, allowing fluid to leak through the port or aperture even though the valve sealing member is sealingly engaged to the seating material. Under these circumstances, sealing engagement of the valve sealing member to the seating material is ineffective in sealing the port or aperture.

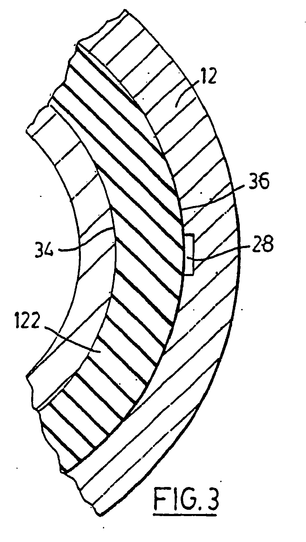

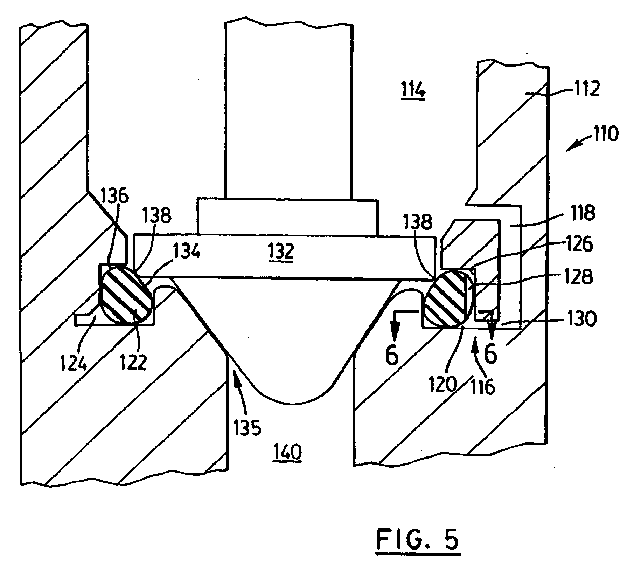

To mitigate this problem, it is known to pressurize the cavity with the sealing gland, to thereby provide fluid pressure forces to act upon the seating material, opposing those fluid pressure forces acting on the seating material from within the fluid passage, and thereby mitigating loss of sealing engagement between the seating material and the sealing gland. An example of pressurized seals is disclosed in US-A 5,474,104 and US-A 5,785,082 (Superior Valve). The latter starting from the preamble of claim 1 and disclosing an elastic O-ring in those Figures 3, 5, sealing a passage of fluid in cooperation with a valve sealing member.

Valves with pressurized seals may experience problems with maintaining sealing engagement of the seating surface against the sealing gland. Because the seating surface is pressed into the cavity of the sealing gland, the seating surface is sealingly engaged to the sealing gland at multiple points, thereby creating multiple individual cavities between the seating surface and the sealing gland. It is believed that fluid introduced into the sealing gland, for purposes of pressurizing the seal, does not access these individual cavities. As a result, fluidpressure introduced into the sealing gland cavity is not necessarily effective in opposing the fluid pressure forces acting on the seating member from within the fluid passage, thereby potentially compromising the sealing of the seating member to the sealing gland. This problem is to be alleviated.

The present invention provides a valve comprising a body including a fluid passage, a valve seat including a sealing gland including a support surface, the support surface including a notch, and a resilient valve seat member sealingly disposed within the sealing gland, and a valve sealing member disposed within the fluid passage and configured to sealingly engage the valve seat member to effect sealing of the valve sealing member to the valve seat, wherein the notch is configured to facilitate application of a fluid pressure on the resilient valve seat member to maintain sealing engagement between the valve seat member and the sealing gland (claim 1).

In another aspect, the present invention provides a valve comprising a body including a fluidpassage, a valve seat defining an orifice, and including a sealing gland, and a resilient valve seat member disposed within the sealing gland, and including a notch, and a valve sealing member disposed within the fluid passage and configured to seat against the valve seat member to effect sealing of the valve sealing member to the valve seat and thereby close the orifice, wherein the notch is configured to facilitate application ofthe fluid pressure on the valve seat member to prevent leakage through the orifice when the valve sealing member is seated against the valve seat member.

In a further aspect, the present invention provides any of the valves described above wherein the notch is configured to facilitate the application ofthe second fluid pressure on the valve seat member to prevent leakage through the orifice and between the valve sealing member and the sealing gland when the valve sealing member is seated against the valve seat member.

In a further aspect, the present invention provides any of the valves described above wherein the valve seat member includes a first pressure responsive surface, exposed to the fluid passage, and including a valve engaging surface portion, wherein the valve engaging surface portion is configured to engage the valve sealing member to effect sealing of the valve sealing member to the valve seat, a second pressure responsive surface configured to receive the application of the fluid pressure, wherein the notch is configured to facilitate the application of the fluid pressure on the second pressure responsive surface to maintain engagement of the valve seat member to the sealing gland upstream of the valve engaging surface.

In a further aspect, the present invention provides any of the valves described above wherein the notch is configured to facilitate application of the fluid pressure on the second pressure responsive surface to counterbalance an application of forces on the first pressure responsive surface.

In a further aspect, the present invention provides any ofthe valves described above, wherein the second pressure responsive surface opposes the notch.

In a further aspect, the present invention provides any of the valves described above, wherein the valve seat member is supported within the sealing gland.

In a further aspect, the present invention provides any of the valves described above, wherein the sealing gland includes a cavity in communication with the fluid pressure source, wherein the cavity includes a channel between the support surface and the second pressure responsive member defined by the notch.

In a further aspect, the present invention provides any of the valves described above, wherein the notch is characterized according to claims 7, 8 or 20, 21.

In a further aspect, the present invention provides any of the valves described above, wherein the first pressure responsive surface is opposite to the second pressure responsive surface.

In a further aspect, the present invention provides any of the valves described above, wherein the fluid passage is the fluid pressure source.

In a further aspect, the present invention provides any of the valves described above, wherein the valve further includes a pressure communication passage effecting communication between the cavity of the sealing gland and the fluid passage.

In a further aspect, the present invention provides any of the valves described above, wherein the sealing gland includes an aperture, and wherein the pressure communication passage is coupled to the aperture.

In a further aspect, the present invention provides a valve comprising a body including a fluid passage, a valve seat, defining an orifice, and including a sealing gland including a cavity, and a resilient valve seat member disposed within the sealing gland, and a valve sealing member disposed within the fluid passage and configured to seat against the valve seat memberto effect sealing of the valve sealing member to the valve seat and thereby close the orifice, wherein the sealing gland includes at least two spaced-apart apertures, and wherein the spaced-apart apertures are configured to distribute fluid pressure within the cavity to act upon the valve seat member to prevent leakage through the orifice when the valve sealing member is seated against the valve seat member.

In a further aspect, the present invention provides a pressurized valve seat defining an orifice and configured for use in a valve comprising a fluid passage and a valve sealing member disposed within the fluid passage, wherein the valve seat comprises a sealing gland including a support surface, the support surface including a notch, and a resilient valve seat member disposed within the sealing gland, and configured to engage the valve sealing member to-effect sealing of the valve sealing member to the valve seat and thereby closing the orifice, wherein the notch is configured to facilitate application of a fluid pressure on the valve seat member to prevent leakage through the orifice when the valve sealing member is engaged to the valve seat member.

In a further aspect, the present invention provides a pressurized valve seat defining an orifice and configured for use in a valve comprising a fluid passage and a valve sealing member disposed within the fluid passage, wherein the valve seat comprises a sealing gland, and a resilient valve seat member disposed within the sealing gland, and configured to engage the valve sealing member to effect sealing of the valve sealing member to the valve seat and thereby closing the orifice, and including a notch, wherein the notch is configured to facilitate application of a fluid pressure on the valve seat member to prevent leakage through the orifice when the valve sealing member is engaged to the valve seat member.

In a further aspect, the present invention provides a pressurized valve seat defining an orifice and configured for use in a valve comprising a fluid passage and a valve sealing member disposed within the fluid passage, wherein the valve seat comprises a sealing gland including a cavity, and a resilient valve seat member disposed within the sealing gland and configured to engage the valve sealing member to effect sealing of the valve sealing member to the valve seat and thereby closing the orifice, wherein the sealing gland includes at least two spaced apart apertures, and wherein the spaced apart apertures are configured to distribute fluid pressure within the cavity to act upon the valve seat member to prevent leakage through the orifice when the valve sealing member is engaged to the valve seat member.

### BRIEF DESCRIPTION OF DRAWINGS

The embodiments of the present invention are described below with reference to the accompanying drawings in which:
Fig. is a sectional elevation view of an embodiment of the valve of the present invention;
Fig. 2 is a detailed sectional elevation view, partly cut-away, of the valve seat area of the valve illustrated in Fig. 1;
Fig. 3 is a plan view of the valve illustrated in Figs. 1 and 2, taken along the lines 3-3 in Fig. 2;
Fig. 4 is a sectional elevation view of another embodiment of the valve of the present invention;
Fig. 5 is a detailed sectional elevation view, partly cut-away, ofthe valve seat area of the valve in Fig. 4;
Fig. 6 is a plan view of the valve illustrated in Figs. 4 and 5, taken along the lines 6-6 in Fig. 5;
Fig. 7 is a sectional elevation view of another embodiment ofthe valve of the present invention;
Fig. 8 is a sectional elevation view, partly cut-away, of the valve seat area of the valve illustrated in Fig. 7.

### DETAILED DESCRIPTION

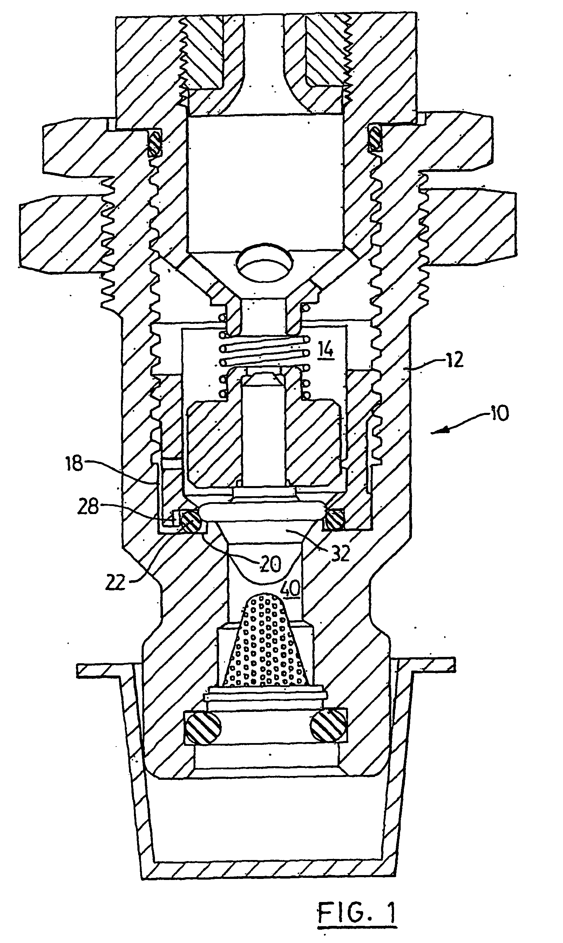

Referring to Figs. 1 to 3, in one embodiment, the present invention provides a valve 10 comprising abody 12 including a fluid passage 14, a valve seat 16, and a communication channel 18. The valve seat 16 includes a sealing gland 20 and a resilient valve seat member 22 disposed and supported within a cavity 24 of the sealing gland 20. The sealing gland 20 has a support surface 26 including a notch 28. The notch 28 defines a channel which forms part of the cavity 24. The communication channel 18 effects communication between the fluid passage 14 and the cavity 24, and, therefore, the notch 28, through an aperture 30 provided in the sealing gland 20. In this respect, the communication channel 18 provides a means for effecting communication between the cavity 24 and a source of fluid pressure (in this case, the fluid passage).

The body 12 is made of a material which is significantly harder than the material of construction ofthe valve seat member 22. The valve seat member 22 is made of a resilient material, such as an elastomeric rubber, for example, nitrile rubber. In turn, the body is made of steel, such as stainless steel, brass, or a hard polymer.

A valve sealing member 32 is disposed within the passage 14. The valve sealing member 32 is configured to seal against the valve seat 16. In this respect, the valve sealing member 32 is configured to seat against the valve seat member 22 which is disposed within the sealing gland 20 of the valve seat 16.

The valve sealing member 32 can be of the form which is biassed to close an orifice 35 defined by the valve seat 16. In this respect, the valve sealing member 32 can be urged into engagement with the valve seat member 22 by a resilient member 33, such as a compression spring. The valve sealing member 32 is unseated by fluid pressure upstream of the valve sealing member 32 (ie. in a direction opposite from the direction in which the force imp arted by the resilient member acts upon the valve sealing member 32). It is understood that the present invention is not limited to such spring-loaded, one way valves. For example, the present invention may be incorporated in solenoid-actuated valves and pintle valves.

The valve seat member 22 includes a first pressure responsive surface 34 and a second pressure responsive surface 36. The first pressure responsive surface 34 is exposed to the fluid passage. The second pressure responsive surface 36 is configured to receive application of a fluid pressure from within the cavity 24, and is opposite the first pressure responsive surface 34.

The first pressure responsive surface 34 is configured to engage the valve sealing member 32 to effect sealing of the valve sealing member 32 to the valve seat 16. The first pressure responsive surface 34 receives application of forces from the valve sealing member 32 (when the valve sealing member 32 engages the first pressure responsive surface 34) and the fluid pressure forces in the fluid passage 14. The first pressure responsive surface 34 includes a valve engaging surface 38, configured to engage the valve sealing member 32.

Sealing of the valve sealing member 32 to the valve seat 16 requires that the valve seat member 22 bridge the gap across the sealing gland 20 upstream 40 of the valve engaging surface 38. In this respect, the valve seat member 22 is maintained engaged to the sealing gland 20 upstream 40 of the valve engaging surface 38 of the first pressure responsive surface 34.

The valve seat member can be in the form of an o-ring or any other compliant seal of various cross-sectional shapes.

To maintain the necessary engagement between the valve seat member 22 and the sealing gland 20, a fluid pressure is introduced into the cavity 24 of the sealing gland 20 to act upon the second pressure responsive surface 36. In this respect, this fluid pressure opposes or counterbalances the above-described foroes acting on the first pressure responsive surface 34 such that the valve seat member 22 remains engaged to the sealing gland 20.

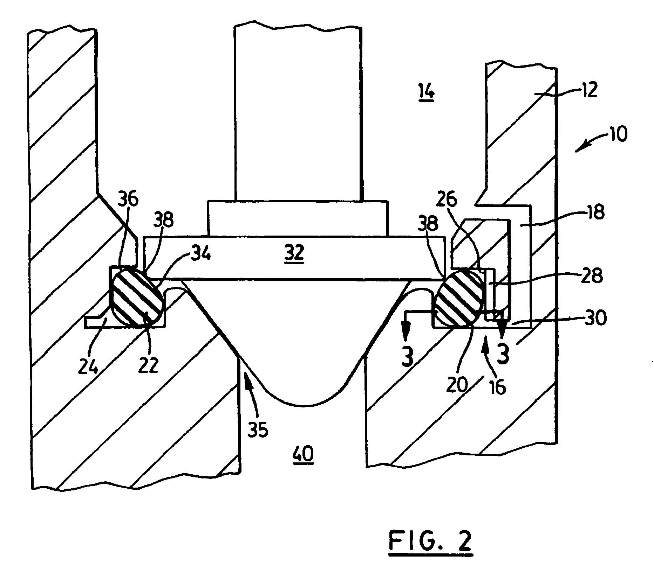

As perhaps best illustrated in Fig. 2, the notch 28 is deliberately formed in the support surface 26 ofthe sealing gland 20, and functions as a channel to effect distribution of fluid pressure through the cavity 24, the fluid pressure being introduced into the cavity 24 through the aperture 30 in the sealing gland 20. In this respect, the notch 28 and the valve seat member 24 are co-operatively configured so that the valve seat member 22 is not capable, upon deformation, of sealing the channel defined by the notch 28. The notch 28 is provided to mitigate against the risk that the valve seat member 22 engages the sealing gland 20 and impedes distribution of fluid pressure through the cavity 24. By impeding distribution in this manner, the effectiveness of the introduced fluid pressure in opposing orcounterbalancing the above-described forces being applied to the first pressure responsive surface 34 would be compromised.

In this respect, the notch 28 opposes the second pressure responsive surface 36 of the valve seat member 22, and is configured to facilitate application of a fluid pressure on the valve seat member 22, and specifically the second pressure responsive surface 36 of the valve seat member 22 to prevent leakage through the orifice 35 when the valve sealing member 32 is seated against the valve seat member 22. Similarly, the notch 28 is also configured to facilitate the application ofthe fluid pressure on the valve seat member 22 to prevent leakage through the orifice 35 and between the valve sealing member 32 and the sealing gland 20 when the valve sealing member 32 is seated against the valve seat member 22. The notch 28 is also configured to facilitate application of the fluid pressure on the second pressure responsive surface 3 6 to counterbalance the application of the above-described forces on the first pressure responsive surface 34 of the valve seat member 22.

In one embodiment, the notch 28 has a depth of at least 2,54 µm (100 micro-inches). In another embodiment, the depth of the notch is at least 25.4 µm (1m-inch). Preferably, the notch 28 has a depth of from 0.508 mm to 0.762 mm (0.020 inches to 0.030 inches).

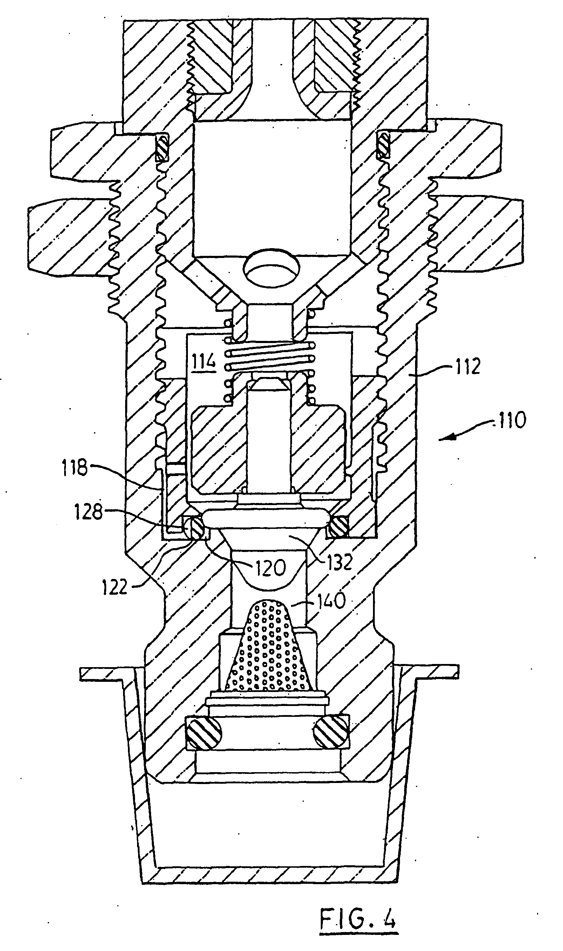

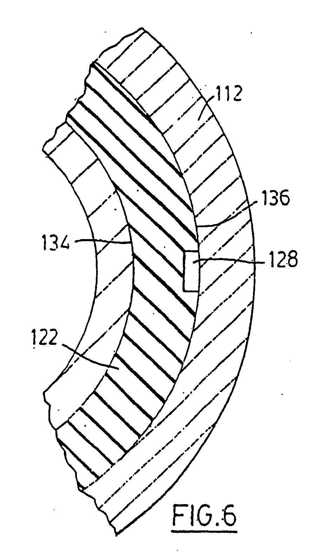

Referring to Figs. 4 to 6 in another embodiment, the present invention provides a valve 110 comprising a body 112 including a fluid passage 114, a valve seat 116, and a communication channel 118. The valve seat 116 includes a sealing gland 120 and a resilient valve seat member 122 disposed and supported within a cavity 124 of the sealing gland 120. The resilient valve seat member 122 includes anotch 128 opposing a support surface 126 of the sealing gland 120. The notch 128 defines a channel which forms part of the cavity 124 of the sealing gland 120. The communication channel 118 effects communication between the fluid passage 114 and the cavity 124, and, therefore, the notch 128, through an aperture 130 provided in the sealing gland 120. In this respect, the communication channel 118 provides a means for effecting communication between the cavity 124 and a source offluid pressure (in this case, the fluid passage 114).

Thebody 112 is made of a material which is significantly harder than the material of construction of the valve seat member 122. The valve seat member 122 is made of a resilient material, such as an elastomeric rubber, for example, nitrile rubber. In turn, the body is made of steel, such as stainless steel, brass, or a hard polymer.

A valve sealing member 132 is disposed within the passage 114. The valve sealing member 132 is configured to seal against the valve seat 116. In this respect, the valve sealing member 132 is configured to seat against or engage the valve seat member 122 which is disposed within the sealing gland 120 of the valve seat 116.

The valve sealing member 132 can be of the form which is biased to close an orifice 135 defined by the valve seat 116. In this respect, the valve sealing member 132 can be urged into engagement with the valve seat member 122 by a resilient member 133, such as a compression spring. The valve sealing member 132 is unseated by fluid pressure upstream of the valve sealing member 132 (i.e. in a direction opposite from the direction in which the force imparted by the resilient member acts upon the valve sealing member 132). It is understood that the present invention is not limited to such spring-loaded, one way valves. For example, the present invention may be incorporated in solenoid-actuated valves and pintle valves.

The valve seat member 122 includes a first pressure responsive surface 134 and a second pressure responsive surface 136. The first pressure responsive surface 134 is exposed to the fluid passage 114. The second pressure responsive surface 136 is configured to receive application of a fluid pressure, and is opposite the first pressure responsive surface 134.

The first pressure responsive surface 134 is configured to engage the valve sealing member 132 to effect sealing ofthe valve sealing member 132 to the valve seat 116. The first pressure responsive surface receives 134 application of forces from the valve sealing member 132 (when the valve sealing member 132 engages the first pressure responsive surface 134) and the fluid pressure forces in the first fluid passage114. The first pressure responsive surface 134 includes a valve engaging surface 138, configured to engage the valve sealing member 132.

Sealing of the valve sealing member 132 to the valve seat 116 requires that the valve seat member 122 bridge the gap across the sealing gland 120 upstream 140 of the valve engaging surface 138. In this respect, the valve seat member 122 is maintained engaged to the sealing gland 120 upstream 140 of the valve engaging surface 138 of the first pressure responsive surface 134.

The valve seat member 122 can be in the form of an o-ring or any other compliant seal of various cross-sectional shapes.

To maintain the necessary engagement between the valve seat member 122 and the sealing gland 120, a fluid pressure is introduced into the cavity 124 of the sealing gland 120 to act upon the second pressure responsive surface 136. In this respect, this fluid pressure opposes or counterbalances the above-described forces acting on the first pressure responsive surface 134 such that the valve seat member remains engaged to the sealing gland 120.

As perhaps best shown in Fig. 4, the notch 128 is deliberately formed in the second pressure responsive surface 136 of the valve seat member 122, and functions as a channel to effect distribution offluid pressure throughout the cavity 124, the fluid pressure being introduced into the cavity 124 through the aperture 130 in the sealing gland 120. The notch 128 is configured so that the valve seat member 122 is not capable, upon deformation, of collapsing the notch 128. The notch 128 is provided to mitigate against the risk that the valve seat member 122 engages the sealing gland 120 and impedes distribution of fluid pressure throughout the cavity 124. By impeding distribution in this manner, the effectiveness ofthe introduced fluid pressure in opposing or counterbalancing the above-described forces being applied to the first pressure responsive surface 134 would be compromised.

In this respect, the notch 128 opposes the support surface 126 of the sealing gland 120, and is configured to facilitate application of a fluidpressure on the valve seat member 122, and specifically the second pressure responsive surface 136 of the valve seat member 122, to prevent leakage through the orifice 13 5 when the valve sealing member 132 is seated against the valve seat member 122. Similarly, the notch 128 is also configured to facilitate the application of the fluid pressure on the valve seat member 122 to prevent leakage through the orifice 135 and between the valve sealing member 132 and the sealing gland 120 when the valve sealing member 132 is seated against the valve seat member 122. The notch 128 is also configured to facilitate application of the fluid pressure on the second pressure responsive surface 136 to counterbalance the application of the above-described forces on the first pressure responsive surface 134 of the valve seat member 122.

In one embodiment, the notch 128 has a depth of at least 25.4 µm (100 microinches). In another embodiment, the depth of notch 128 is at least 25.4 *µ*m (0.001 inches).Preferably, the notch 128 has a depth of between 0.508 mm to 0.762 mm (0.020 inches and 0.030 inche).

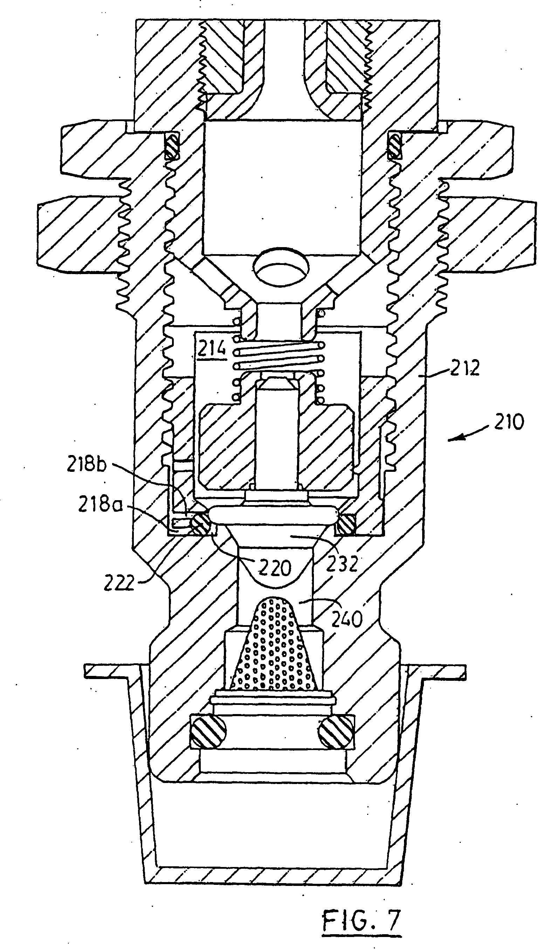

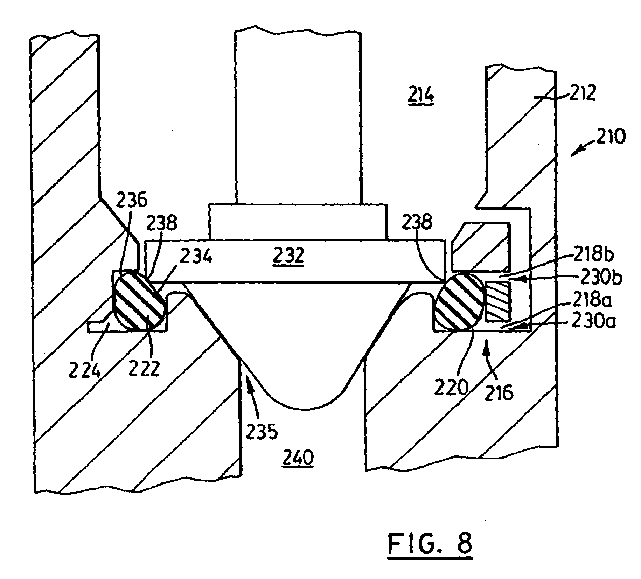

Referring to Figs. 7 and 8 in another embodiment, the present invention provides a valve 210 comprising a body 212 including a fluid passage 214, a valve seat 216, and first and second communication channels 218a, 218b. The valve seat includes a sealing gland 220 and a resilient valve seat member 222 disposed and supported within a cavity 224 of the sealing gland 220. The sealing gland 220 includes first and second spaced apart apertures 230a, 230b communicating with the first and second communication channels 218a, 218b, respectively. The communication channels 218a, 218b effects communication between the fluid passage 214 and the cavity 224, thereby providing a means for effecting communication between the cavity 224 and a source of fluid pressure (in this case, the fluid passage 214).

The body 212 is made of a material which is significantly harder than the material of construction of the valve seat member 222. The valve seat member 222 is made of a resilient material, such as an elastomeric rubber, for example, nitrile rubber. In turn, the body is made of steel, such as stainless steel, brass, or a hard polymer.

A valve sealing member 232 is disposed within the passage 214. The sealing member 232 is configured to seal against the valve seat 216. In this respect, the valve sealing member 232 is configured to seat against or engage the valve seat member 222 which is disposed within the sealing gland 220.

The valve seat member 222 includes a first pressure responsive surface 234 and a second pressure responsive surface 236. The first pressure responsive surface 234 is exposed to the fluid passage 214. The second pressure responsive surface 236 is configured to receive application of a fluid pressure from within the cavity 224, and is opposite the first pressure responsive surface 234.

The first pressure responsive surface 234 is configured to engage the valve sealing member 232 to effect sealing of the valve sealing member 232 to the valve seat 216. The first pressure responsive surface 232 receives application of forces from the valve sealing member 232 (when the valve sealing member 232 engages the first pressure responsive surface 234) and the fluid pressure forces in the fluid passage 214. The first pressure responsive surface 234 includes a valve engaging surface 238, configured to engage the valve sealing member 232.

Sealing of the valve sealing member 232 to the valve seat 216 requires that the valve seat member 222 bridge the gap across the sealing gland 220 upstream 240 of the valve engaging surface 238. In this respect, the valve seat member 222 is maintained engaged to the sealing gland 220 upstream 240 of the valve engaging surface 238 of the first pressure responsive surface 234.

The valve seat member can be in the form of an o-ring or any other compliant seal of various cross-sectional shapes.

To maintain the necessary engagement between the valve seat member 222 and the sealing gland 220, a fluid pressure is introduced into the cavity 224 of the sealing gland to act upon the second pressure responsive surface 236. In this respect, this fluid pressure opposes or counterbalances the above-described forces acting on the first pressure responsive surface such that the valve seat member 222 remains engaged to the sealing gland 220.

The first and second spaced apart apertures 230a, 230b are formed in the sealing gland 220 and are each configured to act as a means for introducing fluid pressure into the cavity 224. In this respect, the first and second apertures 230a, 230b function as first and second means for introducing fluid pressure into the sealing gland cavity 224. Introducing fluid pressure into the cavity 224 at different points within the sealing gland 220 functions as a means for effecting distribution of fluid pressure through the cavity 224. The multiple points of introduction are provided to mitigate against the risk that the valve seat member 222 engages the sealing gland 220 to form multiple isolated cavities and thereby impeding distribution offluid pressure through the cavity 224. By impeding distribution in this manner, the effectiveness of the introduced fluid pressure in opposing or counterbalancing the above-described forces being applied to the first pressure responsive surface 234 would be compromised.

In this respect, the first and second means for introducing fluid pressure into the sealing gland cavity 220 are configured to facilitate application of a fluid pressure on the valve seat member 222, and specifically the second pressure responsive surface 236 of the valve seat member 222, to prevent leakage through an orifice 235 when the valve sealing member 232 is seated against the valve seat member 222. Similarly, the first and second means are also configured to facilitate the application of the distributed fluid pressure on the valve seat member 222 to prevent leakage through the orifice 235 and between the valve sealing member 232 and the sealing gland 220 when the valve sealing member 232 is seated against the valve seat member 232. The first and second means are also configured to facilitate application of the fluid pressure on the second pressure responsive surface 236 to counterbalance the application of the above-described forces on the first pressure responsive surface 234 of the valve seat member 222. It is understood that the invention is not limited to the provision of only first and second means for introducing fluid pressure into the sealing gland cavity, and further suchmeans maybe provided to effect distribution of fluid pressure within the sealing gland cavity 224 with a view to opposing forces applied to the first pressure responsive surface 234 and maintaining the necessary engagement between the valve seat member 222 and the sealing gland 220.

Although the disclosure describes and illustrates preferred embodiments ofthe invention, it is to be understood that the invention is not limited to these particular embodiments. Manyvariations and modifications will now occur to those skilled in the art. For definition ofthe invention, reference is to be made to the appended claims.

## Claims

1. Valve (10, 110, 210) comprising a body (12, 112, 212) said body including:
a fluid passage (14, 114, 214);
a valve seat (16, 116, 216), defining an orifice (35, 135, 235), and
including
a sealing gland (20, 120, 220) including a support surface (26, 126); and
a resilient valve seat member (22, 122, 222) disposed within the sealing gland;
and having
- a valve sealing member (32, 132, 232) disposed within the fluid passage and configured to seat against the valve seat member to effect sealing of the valve sealing member to the valve seat and thereby close the orifice;
**characterised in that**
- the support surface includes a notch (28, 128) and the notch is configured to facilitate application of a fluid pressure on the valve seat member to prevent leakage through the orifice when the valve sealing member is seated against the valve seat member.

2. Valve as claimed in claim 1, wherein the notch is configured to facilitate the application of the fluid pressure on the valve seat member to prevent leakage through the orifice and between the valve sealing member and the sealing gland when the valve sealing member is seated against the valve seat member.

3. Valve as claimed in claim 2, wherein the valve seat member includes:
a first pressure responsive surface, exposed to the fluid passage, and
including a valve engaging surface portion, wherein the valve engaging surface portion is configured to engage the valve sealing member to effect sealing of the valve sealing member to the valve seat;
a second pressure responsive surface configured to receive the application of the fluid pressure;
wherein the notch is configured to facilitate the application of the fluid pressure on the second pressure responsive surface to maintain engagement of the valve seat member to the sealing gland upstream of the valve engaging surface.

4. Valve as claimed in claim 3, wherein the notch is configured to facilitate the application of the fluid pressure on the second pressure responsive surface to counterbalance an application of forces on the first pressure responsive surface.

5. Valve as claimed in claim 4, wherein the second pressure responsive surface opposes the notch.

6. Valve as claimed in claim 5, wherein the valve seat member is supported within the sealing gland.

7. Valve as claimed in claim 6, wherein the notch is **characterized by** a depth of at least 2,54 µm (100 micro-inch or 0,1 milli inch).

8. Valve as claimed in claim 7, wherein the notch is **characterized by** a depth of at least 25,4 µm (1 milli inch or 0.001 inch).

9. Valve as claimed in claim 8, wherein the first pressure responsive surface is opposite to the second pressure responsive surface.

10. Valve as claimed in claim 9, wherein the fluid passage is in communication with the notch.

11. Valve as claimed in claim 10, wherein the sealing gland includes a cavity, wherein the cavity includes a channel between the support surface and the second pressure responsive surface, the channel being defined by the notch.

12. Valve as claimed in claim 11, wherein the valve further includes a pressure communication passage effecting communication between the cavity of the sealing gland and the fluid passage.

13. Valve as claimed in claim 12, wherein the sealing gland includes an aperture, and wherein the pressure communication passage is coupled to the aperture.

14. Valve (10, 110, 210) comprising:
- a body (12, 112, 212) including:
- a fluid passage (14, 114, 214);
- a valve seat (16, 116, 216), defining an orifice (35, 135, 235), including
-- a sealing gland (20, 120, 220); and
-- a resilient valve seat member disposed within the sealing gland; and
- a valve sealing member (32, 132, 232) disposed within the fluid passage and configured to seat against the valve seat member to effect sealing of the valve sealing member to the valve seat and thereby close the orifice;
**characterized in that**
- the valve seat member includes a notch (28, 128) and the notch is configured to facilitate application of a fluid pressure on the valve seat member to prevent leakage through the orifice when the valve sealing member is seated against the valve seat member.

15. Valve as claimed in claim 14, wherein the notch is configured to facilitate the application of the fluid pressure on the valve seat member to prevent leakage through the orifice and between the valve sealing member and the sealing gland when the valve sealing member is seated against the valve seat member.

16. Valve as claimed in claim 15, wherein the valve seat member includes:
- a first pressure responsive surface, exposed to the fluid passage, and including a valve engaging surface portion, wherein the valve engaging surface portion is configured to engage the valve sealing member to effect sealing of the valve sealing member to the valve seat; and
- a second pressure responsive surface configured to receive the application of the fluid pressure;
- wherein the notch is configured to facilitate the application of the fluid pressure on the second pressure responsive surface to maintain engagement of the valve seat member to the sealing gland upstream of the valve engaging surface:

17. Valve as claimed in claim 16, wherein the notch is configured to facilitate the application of the fluid pressure on the second pressure responsive surface to counterbalance an application of forces on the first pressure responsive surface.

18. Valve as claimed in claim 17, wherein the sealing gland includes a support surface, and wherein the support surface opposes the notch.

19. Valve as claimed in claim 18, wherein the valve seat member is supported within the sealing gland.

20. Valve as claimed in claim 19, wherein the notch is **characterized by** a depth of at least 2,54µm (100 micro-inch).

21. Valve as claimed in claim 20, wherein the notch is **characterized by** a depth of at least 25,4 µm (0.001 inch or 1 mili inch).

22. Valve seal as claimed in claim 21, wherein the first pressure responsive surface is opposite to the second pressure responsive surface.

23. Valve as claimed in claim 22, wherein the fluid passage is in communication with the notch.

24. Valve as claimed in claim 23, wherein the sealing gland includes a cavity and wherein the cavity includes a channel between the support surface and the second pressure responsive member, the channel being defined by the notch.

25. Valve as claimed in claim 24, wherein the valve further includes a pressure communication passage effecting communication between the cavity of the sealing gland and the fluid passage.

26. Valve as claimed in claim 25, wherein the gland includes an aperture, and wherein the pressure communication passage is coupled to the aperture.

27. Valve (210) comprising:
a body (212) including:
a fluid passage (214); and
a valve seat (216), defining an orifice having an axis (235), including
a sealing gland (220) including a cavity;
a resilient valve seat member (222) disposed within the sealing gland;
a valve sealing member (232) disposed within the fluid passage and configured to seat against the valve seat member to effect sealing of the valve sealing member to the valve seat and thereby close the orifice;
**characterized in that**
the sealing gland includes at least two axially spaced-apart apertures (230a, 230b), which are configured to distribute fluid pressure within the cavity to act upon the valve seat member to prevent leakage through the orifice when the valve sealing member is seated against the valve seat member.

28. Valve as claimed in claim 27, wherein the at least two spaced apart apertures are configured to facilitate the application of the distributed fluid pressure on the valve seat member to prevent leakage through the orifice and between the valve sealing member and the sealing gland when the valve sealing member is seated against the valve seat member.

29. Valve as claimed in claim 28, wherein the valve seat member includes:
- a first pressure responsive surface, exposed to the fluid passage, and including a valve engaging surface portion, wherein the valve engaging surface is configured to engage the valve sealing member to effect sealing of the valve sealing member to the valve seat; and
- a second pressure responsive surface configured to receive the application of the fluid pressure;
- wherein the at least two spaced apart apertures are configured to facilitate the application of the distributed fluid pressure within the cavity on the second pressure responsive surface to maintain engagement of the valve seat member to the sealing gland upstream of the valve engaging surface.

30. Valve as claimed in claim 29, wherein the spaced-apart apertures are configured to facilitate the application of the fluid pressure on the second pressure responsive surface to counterbalance an application of forces on the first pressure responsive surface.

31. Valve as claimed in claim 30, wherein the valve seat member is supported within the sealing gland.

32. Valve seal as claimed in claim 31, wherein the first pressure responsive surface is opposite to the second pressure responsive surface.

33. Valve as claimed in claim 32, wherein the fluid passage is in communication with the spaced-apart apertures.

34. Valve as claimed in claim 33, wherein the valve further includes at least one communication channel effecting communication between the cavity of the sealing gland and the fluid passage through the spaced-apart apertures.

35. Pressurized valve seat (16, 116, 216), defining an orifice (35, 135, 235) and configured for use in a valve (10, 110, 210) comprising a fluid passage (14, 114, 214), and a valve sealing member (32, 132, 232) disposed within the fluid passage, comprising
- a sealing gland (20, 120, 220) including a support surface (26, 126); and
- a resilient valve seat member (22, 122, 222) disposed within the sealing gland, and configured to engage the valve sealing member to effect sealing of the valve sealing member to the valve seat and thereby close the orifice;
**characterized in that**
- the support surface includes a notch (28, 128) in communication with the fluid pressure source and the notch is configured to facilitate application of a fluid pressure on the valve seat member to prevent leakage through the orifice when the valve sealing member is seated against the valve seat member.

36. Pressurized valve seat (16, 116, 216), defining an orifice (35, 135, 235) and configured for use in a valve (10, 110, 210) comprising a fluid passage (14, 114, 214), a fluid pressure source, and a valve sealing member (32, 132, 232) disposed within the fluid passage, comprising
- a sealing gland (20, 120, 220); and
- a resilient valve seat member (22, 122, 222) disposed within the sealing gland, and configured to engage the valve sealing member to effect sealing of the valve sealing member to the valve seat and thereby close the orifice;
- **characterized in that** the valve seat member includes a notch (28, 128) and the notch is configured to facilitate application of a fluid pressure on the valve seat member to prevent leakage through the orifice when the valve sealing member is seated against the valve seat member.

37. Pressurized valve seat (216), defining an orifice having an axis (235) and configured for use in a valve (210) comprising a fluid passage (214), and a valve sealing member (232) disposed within the fluid passage, comprising:
- a sealing gland (220) including a cavity (224); and
- a resilient valve seat member (222) disposed within the sealing gland and configured to engage the valve sealing member to effect sealing of the valve sealing member to the valve seat and thereby close the orifice;
- **characterized in that**
the sealing gland includes at least two axially spaced-apart apertures (230a, 230b), wherein the spaced-apart apertures are configured to distribute fluid pressure within the cavity to act upon the valve seat member to prevent leakage through the orifice when the valve sealing member is seated against the valve seat member.

## Patentansprüche

1. Ventil (10, 110, 210), aufweisend einen Körper (12, 112, 212), wobei der Körper umfasst:
einen Fluid-Durchlass (14, 114, 214),
einen Ventilsitz (16, 116, 216), der eine Öffnung (35, 135, 235) definiert und umfasst
eine Dichtbuchse (20, 120, 220), die eine Stützfläche (26, 126) umfasst, und
ein nachgiebiges Ventilsitz-Element (22, 122, 222), das innerhalb der Dichtbuchse angeordnet ist,
und aufweist
ein Ventil-Dichtelement (32, 132, 232), das innerhalb des Fluid-Durchlasses angeordnet ist und konfiguriert ist, an dem Ventilsitz-Element zu sitzen, um ein Abdichten des Ventil-Dichtelementes auf dem Ventilsitz hervorzurufen und **dadurch** die Öffnung zu verschließen, **dadurch gekennzeichnet, dass**
die Stützfläche eine Einkerbung (28, 128) umfasst und die Einkerbung konfiguriert ist, die Aufbringung eines Fluid-Drucks auf das Ventilsitz-Element zu vereinfachen, um eine Undichtigkeit durch die Öffnung zu verhindern, wenn das Ventil-Dichtelement an dem Ventilsitz-Element sitzt.

2. Ventil nach Anspruch 1, **dadurch gekennzeichnet, dass** die Einkerbung konfiguriert ist, die Einwirkung des Fluid-Drucks auf das Ventilsitz-Element zu vereinfachen, um eine Undichtigkeit durch die Öffnung und zwischen dem Ventil-Dichtelement und der Dichtbuchse zu verhindern, wenn das Ventil-Dichtelement an dem Ventilsitz-Element sitzt.

3. Ventil nach Anspruch 2, **dadurch gekennzeichnet, dass** das Ventilsitz-Element umfasst:
eine erste auf Druck ansprechende Oberfläche, die dem Fluid-Durchlass ausgesetzt ist und einen Ventileingriffs-Oberflächenbereich umfasst, wobei der Ventileingriffs-Oberflächenbereich konfiguriert ist, an dem Ventil-Dichtelement anzugreifen, um ein Dichten des Ventil-Dichtelementes an dem Ventilsitz hervorzurufen, und
eine zweite auf Druck ansprechende Oberfläche, die konfiguriert ist, die Wirkung des Fluid-Drucks aufzunehmen,
wobei die Einkerbung konfiguriert ist, die Einwirkung des Fluid-Drucks auf die zweite auf Druck ansprechende Oberfläche zu erleichtern, um das Angreifen des Ventilsitz-Elementes an der Dichtbuchse in Strömungsrichtung oberhalb der Ventileingriffs-Oberfläche zu bewahren.

4. Ventil nach Anspruch 3, **dadurch gekennzeichnet, dass** die Einkerbung konfiguriert ist, um die Einwirkung des Fluid-Drucks auf die zweite auf Druck ansprechende Oberfläche zu erleichtern, um eine Wirkung von Kräften auf die erste auf Druck ansprechende Oberfläche auszugleichen.

5. Ventil nach Anspruch 4, **dadurch gekennzeichnet, dass** die zweite auf Druck ansprechende Oberfläche der Einkerbung gegenüber liegt.

6. Ventil nach Anspruch 5, **dadurch gekennzeichnet, dass** das Ventilsitz-Element innerhalb der Dichtbuchse gestützt ist.

7. Ventil nach Anspruch 6, **dadurch gekennzeichnet, dass** die Einkerbung eine Tiefe von wenigstens 2,54 µm (100 Mikrozoll oder 0,1 Millizoll) aufweist.

8. Ventil nach Anspruch 7, **dadurch gekennzeichnet, dass** die Einkerbung eine Tiefe von wenigstens 25,4 µm (1 Millizoll oder 0,001 Zoll) aufweist.

9. Ventil nach Anspruch 8, **dadurch gekennzeichnet, dass** die erste auf Druck ansprechende Oberfläche der zweiten auf Druck ansprechenden Oberfläche gegenüber liegt.

10. Ventil nach Anspruch 9, **dadurch gekennzeichnet, dass** der Fluid-Durchlass mit der Einkerbung in Verbindung steht.

11. Ventil nach Anspruch 10, **dadurch gekennzeichnet, dass** die Dichtbuchse einen Hohlraum beinhaltet, wobei der Hohlraum einen Kanal zwischen der Stützfläche und der zweiten auf Druck ansprechenden Oberfläche umfasst, wobei der Kanal durch die Einkerbung definiert ist.

12. Ventil nach Anspruch 11, **dadurch gekennzeichnet, dass** das Ventil des Weiteren einen Druckverbindungs-Durchlass umfasst, der eine Verbindung zwischen dem Hohlraum der Dichtbuchse und dem Fluid-Durchlass bewirkt.

13. Ventil nach Anspruch 12, **dadurch gekennzeichnet, dass** die Dichtbuchse eine Öffnung umfasst, wobei der Druckverbindungs-Durchlass mit der Öffnung verbunden ist.

14. Ventil (10, 110, 210), umfassend:
- einen Körper (12, 112, 212), umfassend:
- einen Fluid-Durchlass (14, 114, 214),
- einen Ventilsitz (16, 116, 216), der eine Öffnung (35, 135, 235) definiert, umfassend:
- eine Dichtbuchse (20, 120, 220) und
- ein nachgiebiges Ventilsitz-Element, das innerhalb der Dichtbuchse angeordnet ist, und
- ein Ventil-Dichtelement (32, 132, 232), das innerhalb des Fluid-Durchlasses angeordnet und konfiguriert ist, an dem Ventilsitz-Element zu sitzen, um eine Abdichtung des Ventil-Dichtelementes an dem Ventilsitz hervorzurufen und **dadurch** die Öffnung zur verschließen;
**dadurch gekennzeichnet, dass**
- das Ventilsitz-Element eine Einkerbung (28, 128, 228) umfasst und die Einkerbung konfiguriert ist, die Einwirkung eines Fluid-Druckes auf das Ventilsitz-Element zu vereinfachen, um eine Undichtigkeit durch die Öffnung zu verhindern, wenn das Ventil-Dichtelement an dem Ventilsitz-Element sitzt.

15. Ventil nach Anspruch 14, **dadurch gekennzeichnet, dass** die Einkerbung konfiguriert ist, die Einwirkung des Fluid-Drucks auf das Ventilsitz-Element zu vereinfachen, um eine Undichtigkeit durch die Öffnung und zwischen dem Ventil-Dichtelement und der Dichtbuchse zu verhindern, wenn das Ventil-Dichtelement an dem Ventilsitz-Element sitzt.

16. Ventil nach Anspruch 15, **dadurch gekennzeichnet, dass** das Ventilsitz-Element umfasst:
- eine erste auf Druck ansprechende Oberfläche, die dem Fluid-Durchlass ausgesetzt ist und einen Ventileingriffs-Oberflächenbereich umfasst, wobei der Ventileingriffs-Oberflächenbereich konfiguriert ist, an dem Ventil-Dichtelement anzugreifen, um eine Dichtung des Ventil-Dichtelementes an dem Ventilsitz hervorzurufen, und
- eine zweite auf Druck ansprechende Oberfläche, konfiguriert um die Wirkung des Fluid-Drucks aufzunehmen,
- wobei die Einkerbung konfiguriert ist, die Einwirkung des Fluid-Drucks auf die zweite auf Druck ansprechende Oberfläche zu vereinfachen, um das Angreifen des Ventilsitz-Elementes an der Dichtbuchse in Strömungsrichtung oberhalb der Ventileingriffs-Oberfläche zu bewahren.

17. Ventil nach Anspruch 16, **dadurch gekennzeichnet, dass** die Einkerbung konfiguriert ist, die Einwirkung des Fluid-Drucks auf die zweite auf Druck ansprechende Oberfläche zu vereinfachen, um eine Wirkung von Kräften auf die erste auf Druck ansprechende Oberfläche auszugleichen.

18. Ventil nach Anspruch 17, **dadurch gekennzeichnet, dass** die Dichtbuchse eine Stützfläche umfasst, wobei die Stützfläche der Einkerbung gegenüber liegt.

19. Ventil nach Anspruch 18, **dadurch gekennzeichnet, dass** das Ventilsitz-Element innerhalb der Dichtbuchse gestützt ist.

20. Ventil nach Anspruch 19, **dadurch gekennzeichnet, dass** die Einkerbung eine Tiefe von wenigstens 2,54 µm (100 Mikrozoll) aufweist.

21. Ventil nach Anspruch 20, **dadurch gekennzeichnet, dass** die Einkerbung eine Tiefe von wenigstens 25,4 µm (0,001 Zoll oder 1 Millizoll) aufweist.

22. Ventildichtung nach Anspruch 21, **dadurch gekennzeichnet, dass** die erste auf Druck ansprechende Oberfläche der zweiten auf Druck ansprechenden Oberfläche gegenüber liegt.

23. Ventil nach Anspruch 22, **dadurch gekennzeichnet, dass** der Fluid-Durchlass mit der Einkerbung in Verbindung steht.

24. Ventil nach Anspruch 23, **dadurch gekennzeichnet, dass** die Dichtbuchse einen Hohlraum umfasst, wobei der Hohlraum einen Kanal zwischen der Stützfläche und dem zweiten auf Druck ansprechenden Element umfasst, wobei der Kanal durch die Einkerbung definiert ist.

25. Ventil nach Anspruch 24, **dadurch gekennzeichnet, dass** das Ventil des Weiteren einen Druckverbindungs-Durchlass umfasst, der eine Verbindung zwischen dem Hohlraum der Dichtbuchse und dem Fluid-Durchlass bewirkt.

26. Ventil nach Anspruch 25, **dadurch gekennzeichnet, dass** die Buchse eine Öffnung umfasst, wobei der Druckverbindungs-Durchlass mit der Öffnung verbunden ist.

27. Ventil (210), umfassend:
einen Körper (212), umfassend:
einen Fluid-Durchlass (214) und
einen Ventilsitz (216), der eine Öffnung (235) mit einer Achse definiert, umfassend
eine Dichtbuchse (220), umfassend einen Hohlraum, und
ein nachgiebiges Ventilsitz-Element (222), das innerhalb der Dichtbuchse angeordnet ist,
ein Ventil-Dichtelement (232), das innerhalb des Fluid-Durchlasses angeordnet und konfiguriert ist, an dem Ventilsitz-Element zu sitzen, um eine Dichtung des Ventil-Dichtelementes an den Ventilsitz zu bewirken und **dadurch** die Öffnung zu verschließen,
**dadurch gekennzeichnet, dass**
die Dichtbuchse wenigstens zwei axial voneinander beabstandete Öffnungen (230a, 230b) umfasst, die konfiguriert sind, den Fluid-Druck innerhalb des Hohlraums zu verteilen, um auf das Ventilsitz-Element zu wirken, um eine Undichtigkeit durch die Öffnung zu verhindern, wenn das Ventil-Dichtelement an dem Ventilsitz-Element sitzt.

28. Ventil nach Anspruch 27, **dadurch gekennzeichnet, dass** die wenigstens zwei voneinander beabstandeten Öffnungen konfiguriert sind, die Einwirkung des verteilten Fluid-Drucks auf das Ventilsitz-Element zu vereinfachen, um eine Undichtigkeit durch die Öffnung und zwischen dem Ventil-Dichtelement und der Dichtbuchse zu verhindern, wenn das Ventil-Dichtelement an dem Ventilsitz-Element sitzt.

29. Ventil nach Anspruch 28, **dadurch gekennzeichnet, dass** das Ventilsitz-Element umfasst:
- eine erste auf Druck ansprechende Oberfläche, die dem Fluid-Durchlass ausgesetzt ist und einen Ventileingriffs-Oberflächenbereich umfasst, wobei die Ventileingriffs-Oberfläche konfiguriert ist, an dem Ventil-Dichtelement anzugreifen, um ein Dichten des Ventil-Dichtelementes an dem Ventilsitz zu bewirken, und
- eine zweite auf Druck ansprechende Oberfläche, konfiguriert die Wirkung des Fluid-Drucks aufzunehmen,
- wobei die wenigstens zwei voneinander beabstandeten Öffnungen konfiguriert sind, die Einwirkung des verteilten Fluid-Drucks innerhalb des Hohlraums auf die zweite auf Druck ansprechende Oberfläche zu erleichtern, um das Angreifen des Ventilsitz-Elementes an der Dichtbuchse in Strömungsrichtung oberhalb der Ventileingriffs-Oberfläche zu bewahren.

30. Ventil nach Anspruch 29, **dadurch gekennzeichnet, dass** die voneinander beabstandeten Öffnungen konfiguriert sind, die Einwirkung des Fluid-Drucks auf die zweite auf Druck ansprechende Oberfläche zu vereinfachen, um eine Wirkung von Kräften auf die erste auf Druck ansprechende Oberfläche auszugleichen.

31. Ventil nach Anspruch 30, **dadurch gekennzeichnet, dass** das Ventilsitz-Element innerhalb der Dichtbuchse gestützt ist.

32. Ventildichtung nach Anspruch 31, **dadurch gekennzeichnet, dass** die erste auf Druck ansprechende Oberfläche der zweiten auf Druck ansprechenden Oberfläche gegenüber liegt.

33. Ventil nach Anspruch 32, **dadurch gekennzeichnet, dass** der Fluid-Durchlass mit den voneinander beabstandeten Öffnungen in Verbindung steht.

34. Ventil nach Anspruch 33, **dadurch gekennzeichnet, dass** das Ventil des Weiteren wenigstens einen Verbindungskanal umfasst, der eine Verbindung zwischen dem Hohlraum der Dichtbuchse und dem Fluid-Durchlass durch die voneinander beabstandeten Öffnungen bewirkt.

35. Druckdichter Ventilsitz (16, 116, 216), der eine Öffnung (35, 135, 235) definiert und zur Verwendung in einem Ventil (10, 110, 210) konfiguriert ist, das einen Fluid-Durchlass (24, 114, 214) und ein Ventil-Dichtelement (32, 132, 232) umfasst, das innerhalb des Fluid-Durchlasses angeordnet ist, umfassend:
- eine Dichtbuchse (20, 120, 220), umfassend eine Stützfläche (26, 126), und
- ein nachgiebiges Ventilsitz-Element (22, 122, 222), das innerhalb der Dichtbuchse angeordnet ist und konfiguriert ist, an dem Ventil-Dichtelement anzugreifen, um ein Dichten des Ventil-Dichtelementes an dem Ventilsitz zu bewirken und **dadurch** die Öffnung zu verschließen,
**dadurch gekennzeichnet, dass**
- die Stützfläche eine Einkerbung (28, 128) umfasst, die mit der Fluid-Druckquelle in Verbindung steht, und die Einkerbung konfiguriert ist, die Wirkung eines Fluid-Drucks auf das Ventilsitz-Element zu vereinfachen, um einen Durchlass durch die Öffnung zu verhindern, wenn das Ventil-Dichtelement an dem Ventilsitz-Element sitzt.

36. Druckdichter Ventilsitz (16, 116, 216), der eine Öffnung (35, 135, 235) definiert und zur Verwendung in einem Ventil (10, 110, 210) konfiguriert ist, das einen Fluid-Durchlass (14, 114, 214), eine Fluid-Druckquelle und ein Ventil-Dichtelement (32, 132, 232) umfasst, das innerhalb des Fluid-Durchlasses angeordnet ist, umfassend:
- eine Dichtbuchse (20, 120, 220) und
- ein nachgiebiges Ventilsitz-Element (22, 122, 222), das innerhalb der Dichtbuchse angeordnet und konfiguriert ist, an dem Ventil-Dichtelement anzugreifen, um ein Dichten des Ventil-Dichtelementes an dem Ventilsitz zu bewirken und **dadurch** die Öffnung zu verschließen,
- **dadurch gekennzeichnet, dass**
das Ventilsitz-Element eine Einkerbung (28, 128) umfasst und die Einkerbung konfiguriert ist, die Einwirkung eines Fluid-Drucks auf das Ventilsitz-Element zu vereinfachen, um eine Undichtigkeit durch die Öffnung zu verhindern, wenn das Ventil-Dichtelement an dem Ventilsitz-Element sitzt.

37. Druckdichter Ventilsitz (216), der eine Öffnung (235) mit einer Achse definiert und für eine Verwendung in einem Ventil (210) bestimmt ist, das einen Fluid-Durchlass (214) und ein Ventil-Dichtelement (232) umfasst, das innerhalb des Fluid-Durchlasses angeordnet ist, umfassend:
- eine Dichtbuchse (220), umfassend einen Hohlraum (224), und
- ein nachgiebiges Ventilsitz-Element (222), das innerhalb der Dichtbuchse angeordnet und konfiguriert ist, an dem Ventil-Dichtelement anzugreifen, um ein Dichten des Ventil-Dichtelementes an dem Ventilsitz zu bewirken und **dadurch** die Öffnung zu verschließen,
- **dadurch gekennzeichnet, dass**
die Dichtbuchse wenigstens zwei axial von einander beabstandete Öffnungen (230a, 230b) umfasst, wobei die von einander beabstandeten Öffnungen konfiguriert sind, den Fluid-Druck innerhalb des Hohlraums zu verteilen, um auf das Ventilsitz-Element zu wirken, um einen Durchlass durch die Öffnung zu verhindern, wenn das Ventil-Dichtelement an dem Ventilsitz-Element sitzt.

## Revendications

1. Soupape (10, 110, 210) comprenant un corps (12, 112, 212),
ledit corps comprenant :
un passage de fluide (14, 114, 214);
un siège de soupape (16, 116, 216), définissant un orifice (35, 135, 235), et comprenant :
un presse-étoupe d'étanchéité (20, 120, 220) comprenant une surface de support (26, 126); et
un élément de siège de soupape élastique (22, 122, 222) disposé à l'intérieur du presse-étoupe d'étanchéité; et ayant :
- un élément d'étanchéité de soupape (32, 132, 232) disposé à l'intérieur du passage de fluide et configuré pour s'appuyer contre l'élément de siège de soupape pour assurer l'étanchéité de l'élément d'étanchéité de soupape sur le siège de soupape et fermer de la sorte l'orifice;
**caractérisée en ce que**
- la surface de support comprend une encoche (28, 128) et l'encoche est configurée pour faciliter l'application d'une pression de fluide sur l'élément de siège de soupape afin d'empêcher une fuite à travers l'orifice lorsque l'élément d'étanchéité de soupape s'appuie contre l'élément de siège de soupape.

2. Soupape selon la revendication 1, dans laquelle l'encoche est configurée pour faciliter l'application de la pression de fluide sur l'élément de siège de soupape pour empêcher une fuite à travers l'orifice et entre l'élément d'étanchéité de soupape et le presse-étoupe d'étanchéité lorsque l'élément d'étanchéité de soupape s'appuie contre l'élément de siège de soupape.

3. Soupape selon la revendication 2, dans laquelle l'élément de siège de soupape comprend :
une première surface sensible à la pression, exposée au passage de fluide, et comprenant une partie de surface d'engagement de soupape et dans laquelle la partie de surface d'engagement de soupape est configurée pour s'engager sur l'élément d'étanchéité de soupape afin d'assurer l'étanchéité de l'élément d'étanchéité de soupape sur le siège de soupape;
une seconde surface sensible à la pression configurée pour recevoir l'application de la pression de fluide;
dans laquelle l'encoche est configurée pour faciliter l'application de la pression de fluide sur la seconde surface sensible à la pression afin de maintenir l'engagement de l'élément de siège de soupape sur la presse-étoupe d'étanchéité en amont de la surface d'engagement de soupape.

4. Soupape selon la revendication 3, dans laquelle l'encoche est configurée pour faciliter l'application de la pression de fluide sur la seconde surface sensible à la pression pour contrebalancer une application de forces sur la première surface sensible à la pression.

5. Soupape selon la revendication 4, dans laquelle la seconde surface sensible à la pression est en regard de l'encoche.

6. Soupape selon la revendication 5, dans laquelle l'élément de siège de soupape est supporté dans le presse-étoupe d'étanchéité.

7. Soupape selon la revendication 6, dans laquelle l'encoche est **caractérisée par** une profondeur d'au moins 2,54 µm (100 micropouces ou 0,1 millipouce).

8. Soupape selon la revendication 7, dans laquelle l'encoche est **caractérisée par** une profondeur d'au moins 25,4 µm (1 millipouce ou 0,001 pouce).

9. Soupape selon la revendication 8, dans laquelle la première surface sensible à la pression est en regard de la seconde surface sensible à la pression.

10. Soupape selon la revendication 9, dans laquelle le passage de fluide est en communication avec l'encoche.

11. Soupape selon la revendication 10, dans laquelle le presse-étoupe d'étanchéité comprend une cavité, dans laquelle la cavité comprend un canal entre la surface de support et la seconde surface sensible à la pression, le canal étant défini par l'encoche.

12. Soupape selon la revendication 11, dans laquelle la soupape comprend en outre un passage de communication de pression assurant une communication entre la cavité du presse-étoupe d'étanchéité et le passage de fluide.

13. Soupape selon la revendication 12, dans laquelle le presse-étoupe d'étanchéité comprend une ouverture et dans laquelle le passage de communication de pression est couplé à l'ouverture.

14. Soupape (10, 110, 210) comprenant :
- un corps (12, 112, 212) comprenant :
- un passage de fluide (14, 114, 214);
- un siège de soupape (16, 116, 216) définissant un orifice (35, 135, 235), comprenant :
- un presse-étoupe d'étanchéité (20, 120, 220); et
- un élément de siège de soupape élastique disposé à l'intérieur du presse-étoupe d'étanchéité; et
- un élément d'étanchéité de soupape (32, 132, 232) disposé à l'intérieur du passage de fluide et configuré pour s'appuyer contre l'élément de siège de soupape afin d'assurer l'étanchéité de l'élément d'étanchéité de soupape sur le siège de soupape et fermer de la sorte l'orifice;
**caractérisée en ce que**
- l'élément de siège de soupape comprend une encoche (28, 128) et l'encoche est configurée pour faciliter l'application d'une pression de fluide sur l'élément de siège de soupape afin d'empêcher une fuite à travers l'orifice lorsque l'élément d'étanchéité de soupape s'appuie contre l'élément de siège de soupape.

15. Soupape selon la revendication 14, dans laquelle l'encoche est configurée pour faciliter l'application de la pression de fluide sur l'élément de siège de soupape afin d'empêcher une fuite à travers l'orifice et entre l'élément d'étanchéité de soupape et le presse-étoupe d'étanchéité lorsque l'élément d'étanchéité de soupape s'appuie contre l'élément de siège de soupape.

16. Soupape selon la revendication 15, dans laquelle l'élément de siège de soupape comprend :
- une première surface sensible à la pression, exposée au passage de fluide, et comprenant une partie surface d'engagement de soupape, dans laquelle la partie de surface d'engagement de soupape est configurée pour s'engager sur l'élément d'étanchéité de soupape afin d'assurer l'étanchéité de l'élément d'étanchéité de soupape sur le siège de soupape; et
- une seconde surface sensible à la pression configurée pour recevoir l'application de la pression de fluide;
- dans laquelle l'encoche est configurée pour faciliter l'application de la pression de fluide sur la seconde surface sensible à la pression afin de maintenir l'engagement de l'élément de siège de soupape sur le presse-étoupe d'étanchéité en amont de la surface d'engagement de soupape.

17. Soupape selon la revendication 16, dans laquelle l'encoche est configurée pour faciliter l'application de la pression de fluide sur la seconde surface sensible à la pression pour contrebalancer une application des forces sur la première surface sensible à la pression.

18. Soupape selon la revendication 17, dans laquelle le presse-étoupe d'étanchéité comprend une surface de support, dans laquelle la surface de support est en regard de l'encoche.

19. Soupape selon la revendication 18, dans laquelle l'élément de siège de soupape est supporté à l'intérieur du presse-étoupe d'étanchéité.

20. Soupape selon la revendication 19, dans laquelle l'encoche est **caractérisée par** une profondeur d'au moins 2,54 µm (100 micropouces).

21. Soupape selon la revendication 20, dans laquelle l'encoche est **caractérisée par** une profondeur d'au moins 25,4 µm (0,001 millipouce ou 1 pouce).

22. Siège de soupape selon la revendication 21, dans lequel la première surface sensible à la pression est en regard de la seconde surface sensible à la pression.

23. Soupape selon la revendication 22, dans laquelle le passage de fluide est en communication avec l'encoche.

24. Soupape selon la revendication 23, dans laquelle le presse-étoupe d'étanchéité comprend une cavité et dans laquelle la cavité comprend un canal entre la surface de support et la seconde surface sensible à la pression, le canal étant défini par l'encoche.

25. Soupape selon la revendication 24, dans laquelle la soupape comprend en outre un passage de communication de pression assurant une communication entre la cavité du presse-étoupe d'étanchéité et le passage de fluide.

26. Soupape selon la revendication 25, dans laquelle le presse-étoupe comprend une ouverture et dans laquelle le passage de communication de pression est couplé à l'ouverture.

27. Soupape (210) comprenant :
un corps (212) comprenant :
un passage de fluide (214);
un siège de soupape (216), définissant un orifice ayant un axe (235), comprenant :
un presse-étoupe (220) comprenant une cavité;
un élément de siège de soupape élastique (222) disposé à l'intérieur du presse-étoupe d'étanchéité;
un élément d'étanchéité de soupape (232) disposé à l'intérieur du passage de fluide et configuré pour s'appuyer contre l'élément de siège de soupape afin d'assurer l'étanchéité de l'élément d'étanchéité de soupape sur le siège de soupape et fermer de la sorte l'orifice;
**caractérisée en ce que**
l'élément d'étanchéité comprend au moins deux ouvertures axialement espacées l'une de l'autre (230a, 230b), qui sont configurées pour distribuer la pression de fluide à l'intérieur de la cavité afin d'agir sur l'élément de siège de soupape de manière à empêcher une fuite à travers l'orifice lorsque l'élément d'étanchéité de soupape s'appuie contre l'élément de siège de soupape.

28. Soupape selon la revendication 27, dans laquelle les au moins deux ouvertures espacées l'une de l'autre sont configurées pour faciliter l'application de la pression de fluide distribuée sur l'élément de siège de soupape pour empêcher une fuite à travers l'orifice et entre l'élément d'étanchéité de soupape et le presse-étoupe d'étanchéité lorsque l'élément d'étanchéité de soupape s'appuie contre l'élément de siège de soupape.

29. Soupape selon la revendication 28, dans laquelle l'élément de siège de soupape comprend :
- une première surface sensible à la pression, exposée au passage de fluide, et comprenant une partie de surface d'engagement de soupape, dans laquelle la surface d'engagement de soupape est configurée pour s'engager sur l'élément d'étanchéité de soupape afin d'assurer l'étanchéité de l'élément d'étanchéité de soupape sur le siège de soupape; et
une seconde surface sensible à la pression configurée pour recevoir l'application de la pression de fluide;
dans laquelle les ou moins deux ouvertures espacées l'une de l'autre sont configurées pour faciliter l'application de la pression de fluide distribuée à l'intérieur de la cavité sur la seconde surface sensible à la pression pour maintenir l'engagement de l'élément de siège de soupape sur le presse-étoupe d'étanchéité en amont de la surface d'engagement de soupape.

30. Soupape selon la revendication 29, dans laquelle les ouvertures espacées l'une de l'autre sont configurées pour faciliter l'application de la pression de fluide sur la seconde surface sensible à la pression pour contrebalancer une application des forces sur la première surface sensible à la pression.

31. Soupape selon la revendication 30, dans laquelle l'élément de siège de soupape est supporté à l'intérieur du presse-étoupe d'étanchéité.

32. Siège de soupape selon la revendication 31, dans laquelle la première surface sensible à la pression est située en regard de la seconde surface sensible à la pression.

33. Soupape selon la revendication 32, dans laquelle le passage de fluide est en communication avec les ouvertures espacées l'une de l'autre.

34. Soupape selon la revendication 33, dans laquelle la soupape comprend au moins un canal de communication effectuant la communication entre la cavité du presse-étoupe d'étanchéité et le passage de fluide à travers les ouvertures espacées l'une de l'autre.

35. Siège de soupape sous pression (16, 116, 216), définissant un orifice (35, 135, 235) et configuré pour usage dans une soupape (10, 110, 210) comprenant un passage de fluide (14, 114, 214), et un élément d'étanchéité de soupape (32, 132, 232) disposé à l'intérieur du passage de fluide, comprenant :
- un presse-étoupe d'étanchéité (20, 120, 220) comprenant une surface de support (26, 126); et
- un élément de siège de soupape élastique (22, 122, 222) disposé à l'intérieur du presse-étoupe d'étanchéité, et configuré pour s'engager sur l'élément d'étanchéité de soupape pour assurer l'étanchéité de l'élément d'étanchéité de soupape sur le siège de soupape et fermer de la sorte l'orifice;
**caractérisé en ce que**
- la surface de support comprend une encoche (28, 128) en communication avec la source de pression de fluide et l'encoche est configurée pour faciliter l'application d'une pression de fluide sur l'élément de siège de soupape afin d'empêcher une fuite à travers l'orifice lorsque l'élément d'étanchéité de soupape s'appuie contre l'élément de siège de soupape.

36. Siège de soupape sous pression (16, 116, 216), définissant un orifice (35, 135, 235) et configuré pour usage dans une soupape (10, 110, 210) comprenant un passage de fluide (14, 114, 214), une source de pression de fluide et un élément d'étanchéité de soupape (32,132, 232) disposé à l'intérieur du passage de fluide, comprenant :
- un presse-étoupe d'étanchéité (20, 120, 220); et
- un élément de siège de soupape élastique (22, 122, 222) disposé à l'intérieur du presse-étoupe et configuré pour s'engager sur l'élément d'étanchéité de soupape afin d'assurer l'étanchéité de l'élément de siège de soupape sur le siège de soupape et fermer de la sorte l'orifice; **caractérisé en ce que** l'élément de siège de soupape comprend une encoche (28, 128) et l'encoche est configurée pour faciliter l'application d'une pression de fluide sur l'élément de siège de soupape pour empêcher une fuite à travers l'orifice lorsque l'élément d'étanchéité de soupape s'appuie contre l'élément de siège de soupape.

37. Siège de soupape sous pression (216), définissant un orifice (235) et configuré pour usage dans une soupape (210), comprenant un passage de fluide (214), et un élément d'étanchéité de soupape (232) disposé à l'intérieur du passage de fluide, comprenant :
- un presse-étoupe (220) comprenant une cavité (224); et
- un élément de siège de soupape élastique (22, 122, 222) disposé à l'intérieur du presse-étoupe d'étanchéité et configuré pour s'engager dans l'élément d'étanchéité de soupape afin d'assurer l'étanchéité de l'élément de siège de soupape sur le siège de soupape et fermer de la sorte l'orifice;
**caractérisé en ce que**
le presse-étoupe d'étanchéité comprend au moins deux ouvertures axialement espacées l'une de l'autre (230a, 230b), dans lequel les ouvertures espacées l'une de l'autre sont configurées pour distribuer la pression de fluide à l'intérieur de la cavité pour agir sur l'élément de siège de soupape afin d'empêcher une fuite à travers l'orifice lorsque l'élément d'étanchéité de soupape s'appuie contre l'élément de siège de soupape.
